# EUROPÄISCHE PATENTSCHRIFT

(11) **EP 3 575 904 B1**
(45) Veröffentlichungstag und Bekanntmachung des Hinweises auf die Patenterteilung: **28.06.2023**
(21) Anmeldenummer: 18175010.0
(22) Anmeldetag: 30.05.2018
(51) Int. Cl.: G05B 19/05

(54) **VERFAHREN ZUR ERSTELLUNG EINES REZEPTES FÜR EINE VERFAHRENSTECHNISCHE PROZESSANLAGE**
METHOD FOR PRODUCING A RECIPE FOR A PROCESS ENGINEERING SYSTEM
PROCÉDÉ DE CRÉATION D'UNE RECETTE POUR UNE INSTALLATION DE PROCÉDÉ INDUSTRIEL

(43) Veröffentlichungstag der Anmeldung: 04.12.2019
(73) Patentinhaber: Siemens Aktiengesellschaft, 80333 München (DE)
(72) Erfinder: Maurmaier, Mathias, 70839 Gerlingen (DE); Stutz, Andreas, 76344 Eggenstein-Leopoldshafen (DE)
(74) Vertreter: Siemens Patent Attorneys

(56) Entgegenhaltungen:
- EP-A1- 2 866 105
- EP-A1- 3 246 773
- WO-A1-2017/076420
- DE-A1-102006 058 282

## Beschreibung

Die Erfindung betrifft ein Verfahren zur Erstellung eines Rezeptes für eine verfahrenstechnische Prozessanlage nach Anspruch 1. Außerdem betrifft die Erfindung eine speicherprogrammierbare Steuerung nach Anspruch 6. Zudem betrifft die Erfindung ein Batch-System eines Prozessleitsystems nach Anspruch 7. Darüber hinaus betrifft die Erfindung ein Computerprogramm mit durch einen Computer ausführbaren Programmcodeanweisungen nach Anspruch 8 und ein computerlesbares Medium nach Anspruch 9.

Modulare Prozessanlagen ermöglichen die Realisierung einer verfahrenstechnischen Produktion auf Basis von Services. Unter dem Begriff "Service" wird im Folgenden eine automatisierungstechnische Darstellung von konkreten physikalischen Ausgestaltungen verfahrenstechnischer Operationen der verfahrenstechnischen Prozessanlage verstanden. Dabei liegt eine Herausforderung darin, ein verfahrenstechnisches Rezept möglichst unabhängig von konkreten Anlagenmodulen zu realisieren bzw. einfach an eine konkrete Produktionsanlage anpassen zu können. Unter einem "Rezept" wird im Folgenden eine Ablaufbeschreibung von (ggf. verschiedenen) Services als Orchestrierungsbeschreibung verstanden.

Um die Flexibilität in Bezug auf die Nutzung konkreter Service- und damit Modul-Instanzen zu gewährleisten, muss ein Rezept service- und modulunabhängig beschrieben werden. Dabei wird regelmäßig gefordert, dass jedes Modul in sich abgeschlossen und sicher gestaltet ist.

In der EP 2 866 105 A1 ist eine Basistechnologie beschrieben, welche zur Realisierung von Service-Kapseln verwandt werden kann. Die WO2017076420 offenbart die Erzeugung von Prozessobjektinstanzen für jeweilige Prozesskomponenten eines Automatisierungssystems.

Enthält das Rezept eine verfahrenstechnische Operation, an welcher zwei Module beteiligt sind, so müssen im Rezept zwei Services (je einer pro Modul) für die Erfüllung einer Funktion angesprochen werden. Dies erhöht den Aufwand bei der Rezepterstellung und -pflege nach einem Umbau der Prozessanlage deutlich. Ein bekannter Ansatz zur Realisierung einer übergeordneten Ablaufsteuerung bzw. eines Rezepts für modulare Anlagen besteht darin, die Schrittkette mit einzelnen, feingranularen Services jeweils auf die konkrete Prozessanlage anzupassen. Dies erfordert jedoch einen hohen manuellen Aufwand.

Der Erfindung liegt die Aufgabe zugrunde, ein effizienteres, vereinfachtes Verfahren zur Erstellung eines Rezeptes für eine verfahrenstechnische Prozessanlage anzugeben.

Diese Aufgabe wird gelöst durch ein Verfahren nach Anspruch 1.

Das erfindungsgemäße Verfahren ist dadurch gekennzeichnet, dass zur Erstellung des Rezeptes für jeden einzelnen Service ein dem Service zugeordnetes Stellvertreterobjekt verwendet wird, wobei das Stellvertreterobjekt eine Parametrierung aufweist, mittels derer bei einer Zusammenführung des erstellten Rezeptes und einer Topologie der verfahrenstechnischen Prozessanlage die konkreten physikalischen Ausgestaltungen der verfahrenstechnischen Operationen der verfahrenstechnischen Prozessanlage in das Rezept mit einbezogen werden können.

Unter dem Begriff "Service" wird eine automatisierungstechnische Darstellung von konkreten physikalischen Ausgestaltungen verfahrenstechnischer Operationen der verfahrenstechnischen Prozessanlage verstanden. Beispielweise kann die verfahrenstechnische Prozessanlage einen Service "Entleeren", "Temperieren", "Rühren" oder "Befüllen" aufweisen.

Unter einem "Rezept" wird im Folgenden eine Ablaufbeschreibung von (ggf. verschiedenen) Services als Orchestrierungsbeschreibung verstanden. Unter dem Begriff der "Topologie" der Prozessanlage werden konkrete Bauelemente, Maschinen, Sensoren, Aktoren und dgl. verstanden, die Teil der verfahrenstechnischen Prozessanlage sind.

Das erfindungsgemäße Verfahren ermöglicht es, die Erstellung eines Rezeptes für eine verfahrenstechnische Prozessanlage von realen Service-Instanzen der verfahrenstechnischen Prozessanlage zu entkoppeln. Die Orchestrierungsvorschrift (das Rezept) kann daher unabhängig von der tatsächlichen Implementierung der einzelnen Services der verfahrenstechnischen Prozessanlage erzeugt werden. Nach der Erstellung des Rezeptes kann das modulunabhängige Anlagenrezept dann mit der mittels eines Modul-Engineerings und eines Pool-Engineerings in Verbindung gebracht werden, um eine modulbasierte Orchestrierung zu erhalten.

Das oder die Stellvertreterobjekte werden in einer speicherprogrammierbaren Steuerung (SPS) eines Leitsystems der verfahrenstechnischen Prozessanlage oder in einem Batch-System des Leitsystems der verfahrenstechnischen Prozessanlage realisiert. Unter einem Batch-System wird ein speziell auf die Automatisierung von Batch-Prozessen (speziell für chargenproduzierende Prozessanlagen) ausgelegter Teil des Leitsystems verstanden.

Bei einer bevorzugten Weiterbildung der Erfindung bilden das oder die Stellvertreterobjekte einen Zustand des jeweils zugeordneten Services aus einem verfahrenstechnischen Modul, dem der Service zugeordnet ist, zeitlich synchronisiert ab, insbesondere in der speicherprogrammierbaren Steuerung oder in dem Batch System eines Leitsystems der verfahrenstechnischen Prozessanlage.

Erfindungsgemäß ist wenigstens ein Teil der Stellvertreterobjekte jeweils einem Service mit einer bestimmten Serviceinstanz, die eine bestimmte verfahrenstechnische Funktion repräsentiert, zugeordnet. Entsprechend kann der wenigstens eine Teil der Stellvertreterobjekte nur zusammen mit dem einen Service mit der bestimmten Serviceinstanz verwendet werden.

Bei einer bevorzugten Weiterbildung des erfindungsgemäßen Verfahrens weist ein verfahrenstechnisches Modul wenigstens einen ersten Service auf, der wenigstens eine erste Serviceinstanz und eine zweite Serviceinstanz aufweist, die sich hinsichtlich einer von ihnen repräsentierten verfahrenstechnischen Funktion voneinander unterscheiden. Zusätzlich weist das verfahrenstechnische Modul wenigstens einen zweiten Service auf, der wenigstens eine Serviceinstanz aufweist, die eine identische verfahrenstechnische Funktion wie die erste oder die zweite Serviceinstanz des ersten Services repräsentiert. Dabei ist wenigstens ein Stellvertreterobjekt derjenigen Serviceinstanz zugeordnet, die der erste Service und der zweite Service identisch aufweisen.

Zur Erstellung des Rezeptes für wenigstens zwei verschiedene Services kann ein den Services zugeordnetes Stellvertreterobjekt verwendet werden, wobei die Services vorzugsweise sich voneinander unterscheidenden verfahrenstechnischen Modulen zugeordnet sind.

Die Aufgabe wird zudem gelöst durch eine speicherprogrammierbare Steuerung nach Anspruch 6.

Die speicherprogrammierbare Steuerung ist dadurch gekennzeichnet, dass in der speicherprogrammierbaren Steuerung für jeden einzelnen Service ein dem Service zugeordnetes Stellvertreterobjekt realisiert ist, wobei das Stellvertreterobjekt eine Parametrierung aufweist, mittels derer bei einer Zusammenführung des erstellten Rezeptes und einer Topologie der verfahrenstechnischen Prozessanlage die konkreten physikalischen Ausgestaltungen der verfahrenstechnischen Operationen der verfahrenstechnischen Prozessanlage in das Rezept mit einbezogen werden können.

Die Aufgabe wird zudem gelöst durch Batch-System eines Prozessleitsystems nach Anspruch 7 .

Das Batch-System ist dadurch gekennzeichnet, dass in dem Batch-System für jeden einzelnen Service ein dem Service zugeordnetes Stellvertreterobjekt realisiert ist, wobei das Stellvertreterobjekt eine Parametrierung aufweist, mittels derer bei einer Zusammenführung des erstellten Rezeptes und einer Topologie der verfahrenstechnischen Prozessanlage die konkreten physikalischen Ausgestaltungen der verfahrenstechnischen Operationen der verfahrenstechnischen Prozessanlage in das Rezept mit einbezogen werden können.

Die Aufgabe wird zudem gelöst durch ein Computerprogramm nach Anspruch 8.

## Patentansprüche

1. Verfahren zur Erstellung eines Rezeptes für eine verfahrenstechnische Prozessanlage, die wenigstens einen Service aufweist, wobei der wenigstens eine Service eine automatisierungstechnische Darstellung von konkreten physikalischen Ausgestaltungen verfahrenstechnischer Operationen der verfahrenstechnischen Prozessanlage ist,
**dadurch gekennzeichnet, dass**
zur Erstellung einer Vorstufe des Rezeptes zunächst für jeden einzelnen der wenigstens einen Services ein dem Service zugeordnetes Stellvertreterobjekt verwendet wird, wobei das Stellvertreterobjekt eine Parametrierung aufweist, mittels derer bei einer Zusammenführung der erstellten Vorstufe des Rezeptes und einer Topologie der verfahrenstechnischen Prozessanlage die konkreten physikalischen Ausgestaltungen der verfahrenstechnischen Operationen der verfahrenstechnischen Prozessanlage zur Erzeugung des Rezepts mit einbezogen werden,
wobei das oder die Stellvertreterobjekte in einer speicherprogrammierbaren Steuerung eines Leitsystems der verfahrenstechnischen Prozessanlage oder in einem Batch System des Leitsystems der verfahrenstechnischen Prozessanlage realisiert werden.

2. Verfahren nach einem der vorangegangenen Ansprüche, bei dem das oder die Stellvertreterobjekte einen Zustand des jeweils zugeordneten Services aus einem verfahrenstechnischen Modul, dem der Service zugeordnet ist, zeitlich synchronisiert abbilden, insbesondere in der speicherprogrammierbaren Steuerung oder in dem Batch System des Leitsystems der verfahrenstechnischen Prozessanlage.

3. Verfahren nach einem der vorangegangenen Ansprüche, bei dem das Stellvertreterobjekt oder wenigstens ein Teil einer Mehrzahl von den Stellvertreterobjekten jeweils einem Service mit einer bestimmten Serviceinstanz, die eine bestimmte verfahrenstechnische Funktion repräsentiert, zugeordnet ist.

4. Verfahren nach Anspruch 2 oder nach den Ansprüchen 2 und 3, bei dem das verfahrenstechnische Modul wenigstens einen ersten Service aufweist, der wenigstens eine erste Serviceinstanz und eine zweite Serviceinstanz aufweist, die sich hinsichtlich einer von ihnen repräsentierten verfahrenstechnischen Funktion voneinander unterscheiden, und bei dem das verfahrenstechnische Modul wenigstens einen zweiten Service aufweist, der wenigstens eine dritte Serviceinstanz aufweist, die eine identische verfahrenstechnische Funktion wie die erste oder die zweite Serviceinstanz des ersten Services repräsentiert, wobei wenigstens ein Stellvertreterobjekt der Serviceinstanz zugeordnet ist, die der erste Service und der zweite Service identisch aufweisen.

5. Verfahren nach einem der vorangegangenen Ansprüche, bei dem zur Erstellung des Rezeptes für wenigstens zwei verschiedene Services ein den Services zugeordnetes Stellvertreterobjekt verwendet wird, wobei die Services vorzugsweise sich voneinander unterscheidenden verfahrenstechnischen Modulen zugeordnet sind.

6. Speicherprogrammierbare Steuerung, die zur Erstellung eines Rezeptes für eine verfahrenstechnische Prozessanlage, die wenigstens einen Service aufweist, ausgebildet und vorgesehen ist, wobei der wenigstens eine Service eine automatisierungstechnische Darstellung von konkreten physikalischen Ausgestaltungen verfahrenstechnischer Operationen der verfahrenstechnischen Prozessanlage ist,
**dadurch gekennzeichnet, dass**
in der speicherprogrammierbaren Steuerung für jeden einzelnen der wenigstens einen Services ein dem Service zugeordnetes Stellvertreterobjekt realisiert ist, wobei das Stellvertreterobjekt eine Parametrierung aufweist, mittels derer bei einer Zusammenführung einer erstellten Vorstufe des Rezeptes und einer Topologie der verfahrenstechnischen Prozessanlage die konkreten physikalischen Ausgestaltungen der verfahrenstechnischen Operationen der verfahrenstechnischen Prozessanlage zur Erzeugung des Rezepts mit einbezogen werden.

7. Batch-System eines Prozessleitsystems, das zur Erstellung eines Rezeptes für eine verfahrenstechnische Prozessanlage, die wenigstens einen Service aufweist, ausgebildet und vorgesehen ist, wobei der wenigstens eine Service eine automatisierungstechnische Darstellung von konkreten physikalischen Ausgestaltungen verfahrenstechnischer Operationen der verfahrenstechnischen Prozessanlage ist,
**dadurch gekennzeichnet, dass**
in dem Batch-System für jeden einzelnen der wenigstens einen Services ein dem Service zugeordnetes Stellvertreterobjekt realisiert ist, wobei das Stellvertreterobjekt eine Parametrierung aufweist, mittels derer bei einer Zusammenführung einer erstellten Vorstufe des Rezeptes und einer Topologie der verfahrenstechnischen Prozessanlage die konkreten physikalischen Ausgestaltungen der verfahrenstechnischen Operationen der verfahrenstechnischen Prozessanlage zur Erzeugung des Rezepts mit einbezogen werden.

8. Computerprogramm mit durch einen Computer ausführbaren Programmcodeanweisungen zur Implementierung des Verfahrens nach einem der Ansprüche 1 bis 5.

9. Computerlesbares Medium, umfassend Befehle, die bei der Ausführung durch einen Computer diesen veranlassen, das Verfahren nach einem der Ansprüche 1 bis 5 auszuführen.

## Claims

1. Method for creating a recipe for a process-related process plant, which has at least one service, wherein the at least one service is a representation, in terms of automation technology, of concrete physical embodiments of process-related operations of the process-related process plant,
**characterised in that**,
to create a precursor of the recipe, firstly, a substitute object assigned to the service is used for each individual service of the at least one service, wherein the substitute object has a parameterisation, by means of which, when merging the created precursor of the recipe and a topology of the process-related process plant, the concrete physical embodiments of the process-related operations of the process-related process plant are incorporated to create the recipe, wherein the substitute object(s) are realised in a programmable logic controller of a control system of the process-related process plant or in a batch system of the control system of the process-related process plant.

2. Method according to one of the preceding claims, in which the substitute object(s) depict a status of the service allocated in each case, consisting of a process-related module to which the service is allocated, in a temporally synchronised manner, in particular in the programmable logic controller or in the batch system of the control system of the process-related process plant.

3. Method according to one of the preceding claims, in which the substitute object or at least some of a plurality of the substitute objects is/are in each case allocated to a service with a certain service instance, which represents a certain process-related function.

4. Method according to claim 2 or according to claims 2 and 3, in which the process-related module has at least one first service, which has at least one first service instance and one second service instance, which differ from one other with regard to a process-related function which is represented by it, and in which the process-related module has at least one second service, which has at least one service instance, which represents an identical process-related function to the first or the second service instance of the first service, wherein at least one substitute object is allocated to the service instance which the first service and the second service share identically.

5. Method according to one of the preceding claims, in which, in order to create the recipe for at least two different services, a substitute object allocated to the services is used, wherein the services are preferably allocated to process-related modules differing from one another.

6. Programmable logic controller, which is embodied and provided for creating a recipe for a process-related process plant, which has at least one service, wherein the at least one service is a representation, in terms of automation technology, of concrete physical embodiments of process-related operations of the process-related process plant,
**characterised in that**,
for each individual service of the at least one service, a substitute object assigned to the service is realised in the programmable logic controller, wherein the substitute object has a parameterisation, by means of which, when merging a created precursor of the recipe and a topology of the process-related process plant, the concrete physical embodiments of the process-related operations of the process-related process plant are incorporated to create the recipe.

7. Batch system of a process control system, which is embodied and provided for creating a recipe for a process-related process plant, which has at least one service, wherein the at least one service is a representation, in terms of automation technology, of concrete physical embodiments of process-related operations of the process-related process plant,
**characterised in that**,
for each individual service of the at least one service, a substitute object assigned to the service is realised in the batch system, wherein the substitute object has a parameterisation, by means of which, when merging a created precursor of the recipe and a topology of the process-related process plant, the concrete physical embodiments of the process-related operations of the process-related process plant are incorporated to create the recipe.

8. Computer program comprising program code instructions, which can be executed by a computer, for implementing the method according to one of claims 1 to 5.

9. Computer-readable medium, comprising commands which, when executed by a computer, prompt said computer to carry out the method according to one of claims 1 to 5.

## Revendications

1. Procédé de création d'une recette pour une installation de processus d'ingénierie, qui a au moins un service, dans lequel le au moins un service est une présentation en technique d'automatisation de conformations physiques concrètes d'opérations d'ingénierie de l'installation de processus d'ingénierie,
**caractérisé en ce que**
pour la création d'un précurseur de la recette, on utilise d'abord, pour chacun individuel du au moins un service, un objet représentant associé au service, dans lequel l'objet représentant comporte un paramétrage, au moyen duquel, en réunissant le précurseur créé de la recette et une topologie de l'installation de processus d'ingénierie, on inclut , pour la production de la recette, les conformations physiques concrètes des opérations d'ingénierie de l'installation de processus d'ingénierie,
dans lequel on réalise le ou les objets représentants dans une logique à système programmable d'un système de conduite de l'installation de processus d'ingénierie ou dans un système à lot du système de conduite de l'installation de processus d'ingénierie.

2. Procédé suivant l'une des revendications précédentes, dans lequel le au les objets représentants reproduisent, d'une manière synchronisée dans le temps, un état du service associé respectivement, à partir d'un module d'ingénierie, qui est associé au service, notamment dans le système à logique programmable ou dans le système à lot du système de conduite de l'installation de processus d'ingénierie.

3. Procédé suivant l'une des revendications précédentes, dans lequel l'objet représentant ou au moins une partie d'une pluralité d'objets représentants est associé respectivement à un service ayant une instance de service définie, qui représente une fonction d'ingénierie définie.

4. Procédé suivant la revendication 2 ou suivant les revendications 2 et 3, dans lequel le module d'ingénierie a au moins un premier service, qui a au moins une première instance de service et une deuxième instance de service, qui sont différentes l'une de l'autre en ce qui concerne une fonction d'ingénierie qu'elles représentent, et dans lequel le module d'ingénierie a au moins un deuxième service, qui a au moins une troisième instance de service, qui représente une fonction d'ingénierie identique à celle de la première ou de la deuxième instances du premier service, dans lequel au moins un objet représentant est associé à l'instance de service, qui comporte, de manière identique le premier service et le deuxième service.

5. Procédé suivant l'une des revendications précédentes, dans lequel, pour la création de la recette, pour au moins deux services différents, on utilise un objet représentant associé aux services, dans lequel les services sont associés de préférence à des modules d'ingénierie différents les uns des autres.

6. Système à logique programmable, qui est constitué et prévu pour la création d'une recette d'une installation de processus d'ingénierie, qui a au moins un service, dans lequel le au moins un service est une présentation en technique d'automatisation de conformations physiques concrètes d'opérations d'ingénierie de l'installation de processus d'ingénierie,
**caractérisé en ce que**
dans le système à logique programmable est réalisé, pour chacun individuellement du au moins un service, un objet représentant associé au service, dans lequel l'objet représentant a un paramétrage, au moyen duquel, en réunissant un précurseur créé de la recette et une topologie de l'installation de processus d'ingénierie, les conformations physiques concrètes des opérations d'ingénierie de l'installation d'un processus d'ingénierie sont incluses pour la production de la recette.

7. Système à lot d'un système de conduite de processus, qui est constitué et prévu pour la production d'une recette pour une installation de processus d'ingénierie, qui a au moins un service, dans lequel le au moins un service est un service d'une présentation en technique d'automatisation, de conformations physiques concrètes d'opérations d'ingénierie de l'installation de processus d'ingénierie,
**caractérisé en ce que**
dans le système à lot est réalisé, pour chacun individuellement du au moins un service, un objet représentant associé au service, dans lequel l'objet représentant a un paramétrage, au moyen duquel, en réunissant un précurseur créé de la recette et une topologie de l'installation de processus d'ingénierie, les conformations physiques concrètes des opérations d'ingénierie de l'installation d'un processus d'ingénierie sont incluses pour la production de la recette.

8. Programme d'ordinateur ayant des instructions de code de programme pouvant être réalisées par ordinateur pour la mise en œuvre du procédé suivant l'une des revendications 1 à 5.

9. Support déchiffrable par ordinateur, comportant des instructions, qui lors de la réalisation par un ordinateur, font que ce dernier effectue le procédé suivant l'une des revendications 1 à 5.
